# EUROPEAN PATENT APPLICATION

(11) **EP 2 213 753 A1**
(43) Date of publication of application: **04.08.2010**
(21) Application number: 09155189.5
(22) Date of filing: 14.03.2009
(51) Int. Cl.: C21C 5/36, C21C 5/54, C21C 7/00, C21C 7/076

(54) **Method of production of a slag-forming compound for secondary steel refining in a ladle or ladle furnace**

(30) Priority: 02.02.2009 PL 38717109
(71) Applicant: AKADEMIA GORNICZO-HUTNICZA im. Stanislawa Staszica, 30-059 Krakow (PL)
(72) Inventor: Dziarmagowski, Marek, 30-316, Kraków (PL); Falkus, Jan, 31-248, Kraków (PL); Drozdz, Pawel, 32-065, Zary (PL); Karbowniczek, Miroslaw, 30-150, Kraków (PL); Kargul, Tomasz, 27-400, Ostrowiec Sw. (PL); Karwan, Tadeusz, 30-317, Kraków (PL); Karwan-Baczewska, Joanna, 30-317, Kraków (PL); Zawada, Bartlomiej, 33-100, Tarnów (PL)
(74) Representative: Pawlik, Joanna

(57) **Abstract**

The subject matter of the invention is a method of producing a slag-forming compound for secondary steel refining in a ladle or a ladle furnace.

According to the invention, the method of producing a steel-forming compound for secondary steel refining in a ladle or a ladle furnace is as follows: the fragmented slag obtained in the reduction process of steelmaking converter slag with the participation of roasted bauxite or in the reduction process of steelmaking calcium-aluminium ladle slag is blended with fragmented roasted bauxite and/or metallurgical lime. The obtained calcium-aluminium compound (of particle size 10-40 mm and consisting of 20,0-55,0% CaO, 25,0-60,0% Al₂O₃, 6,0-11,0% SiO₂, 2,0-6,5% MgO, 0,5-3,0% (FeO + %Fe₂O₃ + %MnO), 0,5-2,5% TiO₂, 0-0,1 % P₂O₅ and 0,02-0,1 % S) is put into molten steel, so that the mass of solid precipitates in the calcium-aluminium refining slag formed on the surface of the molten steel at 1600°C, determined by computer thermodynamic databases, does not exceed 2,0% of the total slag mass. The reduction process of steelmaking converter slag of particle size under 50 mm, and roasted bauxite of particle size under 50 mm, the amount of which constitutes 15-20% of the mass of the slag reduced, is carried out in the presence of a carbon reducer of particle size under 5 mm, bringing in elemental carbon in the amount of 5,0-10,0% of the mass of the slag reduced. The reduction process of steelmaking calcium-aluminium ladle slag is carried out in the same conditions, only with the participation of a carbon reducer bringing in elemental carbon in the amount of 2,0-5,0% of the mass of the slag reduced. The SiO₂ content in the slag reduced is 10,0-20,0%, and the sulphur content is 0,01-0,15%. The total content of ferrous and manganese oxides in the reduced slag is under 3,0%. The roasted bauxite put into the reduced steelmaking converter slag or reduced steelmaking calcium-aluminium ladle slag contains 86,0-92,0% Al₂O₃, 4,0-6,0% SiO₂, 0-0,5% MgO, 1,2-1,8% Fe₂O₃, 3,0-4,0% TiO₂ and 0-0,8% CaO, and the metallurgical lime put into the reduced steelmaking converter slag or the reduced steelmaking calcium-aluminium ladle slag contains 94,0-98,0% CaO, 1,0-2,0% SiO₂, 0-0,5% MgO and 0,5-5,0% volatile matter.

## Description

The subject of the invention is a method of producing a slag-forming compound for secondary steel refining in a ladle or ladle furnace.

The production of liquid steel takes place in two stages. During the first stage a molten semi-product is produced in a BOF or in an EAF; during the second stage refining is carried out in secondary steelmaking installations. The slag formed during the first stage is cut off when the steel is tapped into a ladle. This is due to its oxygenizing characteristics and high sulphur and phosphorus content, both of which would otherwise render the refining process impossible.

The secondary steelmaking process is carried out under the slag formed in the ladle. The slag should:
- prevent oxygen from being exchanged from the atmosphere to the molten metal,
- assimilate floating non-metallic inclusions,
- enable the desulphurising process of the molten metal,
- have no corrosive influence on the refractory lining.

In order to meet the above requirements the refining slag formed in the ladle should contain as low an amount of ferrous and manganese oxides as possible. This is because these oxides cause an increase in oxygen penetration from the atmosphere to the molten steel. In addition, no solid precipitates should appear in the slag formed or, if they do, the mass of solid precipitates should be very small. A low temperature at which no solid precipitates appear, below 1400°C, is obtained in calcium-aluminium slags of the following chemical constitution: 50-55% CaO, 40-45% Al₂O₃ and 2-3% SiO₂, produced from synthetic materials containing calcium aluminates characterized by a low melting point.

The refining calcium-aluminium slag may be formed in the ladle by:
- the addition of a ready synthetic refining slag,
- the addition of a metallurgical lime and bauxite compound.

A calcium-aluminium synthetic slag is made by the melting or sintering of slag-forming components. Polish patent PL-181057 presents a method of producing a synthetic refining slag. Calcium aluminates, such as 12CaO·7Al₂O₃, CaO·Al₂O₃, 3CaO·Al₂O₃, CaO·2Al₂O₃·SiO₂, 6CaO·4Al₂O₃·MgO·SiO₂, are the main components of the slag. The ready synthetic slag is obtained in reverberatory furnaces, during the burning of limestone and simultaneous sintering of aluminium trioxide or hydroxide or various types of bauxite. The amounts of the components are so adjusted that the calcium oxide (CaO) content in the stock is 50-60%, the aluminium trioxide (Al₂O₃) content is 40-49% and the content of mineralizers - in the form of magnesium and potassium oxides (MgO and K₂O) - is 2,5% by weight. The raw materials for slag production are fragmented beforehand to a fraction under 1 mm and blended with a wet or dry homogenizing method. The sintering process is carried out for 40-60 minutes at a temperature of 1200-1400°C in a reducing atmosphere.

Due to the price level of ready synthetic slags, refining slags formed from compounds based on the CaO-Al₂O₃-SiO₂ system (which are cheaper than molten or sintered ready synthetic slag) are often used for secondary steel refining in a ladle or ladle furnace. They normally consist of lime and roasted bauxite with as low a titanium oxide and ferrous oxide content as possible. The chemical constitution of compounds produced from lime and bauxite may vary across the following ranges: 12-55% CaO, 2-6% SiO₂, 0,5-10% MgO, 1,5-3,0% FeO, 40-70% Al₂O₃, 0,2-6,0% TiO₂, 0-0,1% P₂O₅, 0,02-0,20% S. According to computer databases, the content of solid precipitates in the refining slag formed from such compounds does not exceed 4% of the slag mass at a temperature of 1600°C.

A possibility of a quick formation of refining slag is presented in Polish patent PL-179474. According to the patent specification the chemical composition of the low melting compound should range as follows: 35-50% Al₂O₃, 30-63% CaO, 1-10% SiO₂ and 0-12% MgO, with Al₂O₃ and CaO occurring mainly in the form of calcium aluminates, constituting a mass of 51-95% of the compound. Where the additions of the compound are low, additions of lime, dolomite, calcium carbide or magnesite may be used simultaneously.

The rising price of lime and bauxite has meant that other materials for the formation of synthetic refining slag in a ladle or ladle furnace have been sought. It is known from Polish patent specifications PL-84093, PL-125648, Pl-125943 and PL-146624 that in order to form a refining slag one places the following slag-forming materials onto the molten steel surface: lime, roasted or raw dolomite, limestone, calcium and magnesium carbides. The addition of fluorite is most often used for fluidization of the forming slag, which should be considered inappropriate due to the fluorine emission.

The following materials, which can form a refining slag, are specified in US patent 5279639: 0-30% magnesium carbonate, 0-60% calcium carbonate, 0-35% sodium carbonate, 0-20% glass, 0-25% fluorite, 0-40% aluminium oxide, 0-10% coke, 2-55% calcium carbide, 0-35% lime, 0-9% blast furnace slag, 0-50% calcium aluminate. The patent also presents three examples of slag formation in a ladle. Example 1 shows that a slag-forming material should contain: 15% magnesium carbonate, 58% calcium carbonate, 17% aluminium oxide, 5% sodium carbonate, 4% calcium carbide and 1% coke. According to example 2 a slag-forming material should contain: 60% calcium carbonate, 5% fluorite, 2% coke, 3% calcium carbonate and 30% aluminium oxide. The slag material presented in example 3 consists of: 16.5% calcium carbonate, 13.5% magnezium carbonate, 20.5% lime, 9.0% blast furnace slag, 14.5% aluminium oxide, 20.0 % calcium aluminate, 4.0% calcium carbide and 2.0% coke. Additional information on the possibilities of the formation of slag in a ladle is given in American patent US 5279639.

American patent US 4198229 presents a method of utilizing calcium carbide for the formation of refining slag in a ladle. The main objective of the proposed method is to dephosphatize steel.
Patent US 4198229 presents a method of refining slag formation resulting from blast furnace slag, lime and dolomite being placed onto the surface of molten steel in a ladle.

Carbonate materials are used for the formation of refining slag in the patents discussed. During slag formation these materials disintegrate and require an amount of heat, which may not be possible unless a ladle furnace is available. At the same time the use of calcium carbide may lead to an increase in the carbon content in low carbon steels. In addition, the use of fluorite to reduce slag viscosity is detrimental, due to its hazardous emissions. In some examples of the slag-forming material production one can observe the use of blast furnace slag, which causes an increase in the SiO₂ content in the formed slag and a reduction in its refining qualities.

The ZEWA - "zero waste" method is a method that includes the application of waste materials for slag formation. The method is presented in the following publications: 1. Fleischanderl A., Gennari U., Ilie A.: Revenue from waste. ZEWA - metallurgical process for treatment of residues from steel industry and other industrial sectors to generate valuable products. Ironmaking and Steelmaking, vol. 31, 2004, No 6, pp. 444-449. 2. Fleischanderl A., Gennari U, Borlee J., Jimenez M., Sorrentino F., Delbecq J.M., Grisvard C., Hoffinan J., Calloens J., Kubica K., Roubaud E., Raclavsky M.: Zewa -- ein neues metallurgisch.es Yerfahren zur Herstellung von Wertstoffen aus industriellen Reststofen. Stahl und Eisen, vol. 124, 2004, No. 12, pp. 123-131.

The ZEWA method enables a slag-forming material to be obtained as a result of remelting converter slag with additions of lime and bauxite in an EAF. In order to reduce the content of ferrous and manganese oxides in the converter slag the process is carried out in the presence of a carbon reducer. The liquid non-metallic phase and the liquid metallic phase are formed during the process. After tapping the reduced slag is used as a slag-forming material. The published papers present two examples of obtaining slag-forming materials consisting of:
Example 1 : 39,50% CaO, 13,90% SiO₂, 38,60% Al₂O₃, 1,10% FeO, 0,40% MnO, 4,50% MgO, 0,01%P₂O₅, 1,70% TiO₂, 0,07% S.
Example 2 : 47,90% CaO, 10,30% SiO₂, 33,90% Al₂O₃, 2,20% FeO, 0,60% MnO, 4,30% MgO, 0,01% P₂O₅, 1,50% TiO₂.
Slag-forming materials obtained with the ZEWA method have a high SiO₂ content, in excess of 10%. A high content of ferrous and manganese oxides may also be observed in example 2. This results in a reduction in the refining qualities of the material obtained. A decrease in SiO₂ content, as well as in ferrous and manganese oxide content, is possible only if larger amounts of lime and bauxite are added. Adding more of these materials, in particular of lime, causes a growth in energy consumption and in manufacturing costs. Moreover, the high variability of the chemical composition of the converter slag, virtually uncontrollable during the reducing remelting process, means that additions of calcium and bauxite can only be roughly approximated. As a result a slag forming material of lower refining qualities is obtained.

According to the invention the method of producing a slag-forming compound for secondary steel refining in a ladle or a ladle furnace on the basis of the non-metallic phase from the reduction process of steelmaking converter slag (with the participation of roasted bauxite or steelmaking calcium-aluminium ladle slag) consists in blending the fragmented slag (obtained in the reduction process of steelmaking converter slag with the participation of roasted bauxite or steelmaking calcium-aluminium ladle slag) with fragmented roasted bauxite and/or metallurgical lime. The obtained calcium-aluminium compound of particle size 10-40 mm and consisting of 20,0-55,0% CaO, 25,0-60,0% Al₂O₃, 6,0-11,0% SiO₂, 2,0-6,5% MgO, 0,5-3,0 % (FeO + %Fe₂O₃ + %MnO), 0,5-2,5% TiO₂, 0-0,1% P₂O₅ and 0,02-0,1% S, is put into the molten steel, so that the mass of solid precipitates in the calcium-aluminium refining slag formed on the surface of the molten steel at a temperature of 1600°C- determined by computer thermodynamic databases - does not exceed 2,0% of the total slag mass. The reduction process of steelmaking converter slag of particle size under 50 mm, with the participation of roasted bauxite of particle size under 50 mm (the amount of which constitutes 15-20% of the mass of the slag reduced), is carried out in the presence of a carbon reducer of particle size below 5 mm, bringing in elemental carbon of 5,0-10,0% of the mass of the slag reduced. The reduction process of the calcium-aluminium ladle slag, of particle size under 50 mm, is only carried out with the carbon reducer, which brings in elemental carbon of 2,0-5,0% of the mass of the slag reduced. The SiO₂ content in the slag reduced is 10,0-20,0% and the sulphur content is 0,01-0,15%. The total content of ferrous and manganese oxides in the reduced slag is under 3,0%. The roasted bauxite put into the reduced steelmaking converter slag or into the reduced steelmaking calcium-aluminium ladle slag contains 86-92% Al₂O₃, 4,0-6,0% SiO₂, 0-0,5% MgO, 1,2-1,8% Fe₂O₃, 3,0-4,0% TiO₂ and 0-0,8% CaO, and the lime placed into the reduced steelmaking converter slag or the steelmaking calcium-aluminium ladle slag contains 94-98% CaO, 1,0-2,0% SiO₂, 0-0,5% MgO and 0,5-5,0% volatile matter.
The calcium-aluminium slag-forming compound obtained in the process, consisting of 20,0-55,0% CaO, 25,0-60,0% Al₂O₃, 6,0-11,0% SiO₂, 2,0-6,5% MgO, 0,5-3,0% (FeO + %Fe₂O₃ + %MnO), 0,5-2,5% TiO₂, 0-0,1% P₂O₅ and 0,02-0,1% S, put into the molten steel to form calcium-aluminium refining slag on the steel surface, maintains the same physical and chemical properties, across the full ranges of values.

The slag-forming compound obtained in the process enables the calcium-aluminium refining slag to be formed during secondary steel refining. A small amount of solid precipitates, not exceeding 2,0% at a temperature of 1600°C, enables the compound to be used for the formation of refining slag in a ladle, without the use of any additional materials to reduce its viscosity. It is important if no ladle furnace is available, because in this case the refining processes have to be carried out at a steadily falling molten steel temperature. The utilization of waste steelmaking slag for the compound's production constitutes an additional advantage of the compound.

The production method of a slag-forming compound for secondary steel refining in a ladle or ladle furnace is illustrated by the following embodiment examples.

The basic materials used for the production of a slag-forming compound for secondary steel refining in a ladle or ladle furnace:
- Reduced slag obtained in the reduction process of steelmaking converter slag with the participation of roasted bauxite or steelmaking calcium-aluminium ladle slag.
- Roasted bauxite consisting: 88,0% Al₂O₃, 6,0% SiO₂, <0,01% MgO, 1,35% Fe₂O₃, 3,85% TiO₂, 0,3% CaO.
- Metallurgical lime consisting: 94% CaO, 1,5% SiO₂, 0,3% MgO, 4,2% volatile matter.

### Example 1.

The chemical composition of the steelmaking calcium-aluminium ladle slag: 35,49% CaO, 9,25% SiO₂, 5,96% MgO, 8,14% FeO, 7,23% MnO, 30,39% Al₂O₃, 0,80% TiO₂, 0,04% S. 5 kg of fragmented slag was blended with the ground carbon reducer, bringing in elemental carbon in the amount of 3% of the slag mass. The size of the fragmented slag particles did not exceed 50 mm and the size of the ground reducer particles did not exceed 5 mm. The resulting compound was remelted in a single-electrode electric arc furnace. The process was carried out in a graphite crucible and - at a temperature of 1650°C - took 12 minutes. After the process had been completed a liquid non-metallic phase without solid precipitates together with a liquid metallic phase were obtained. The crucible content was poured onto a steel plate and quenched with compressed air while being poured out. After the reduced metal was separated, 4,2 kg of the reduced slag were obtained. Its chemical constitution was:
41,96% CaO, 10,91% SiO₂, 6,98% MgO, 0,82% FeO, 1,56% MnO, 36,11% Al₂O₃, 0,78% TiO₂, 0,06% S.

To present the options for obtaining slag-forming materials of various chemical compositions the reduced slag was crushed, 3 kg of slag was taken and divided into 3 portions: A, B and C. Each weighed 1 kg and was blended: one portion with roasted bauxite, one portion with roasted bauxite and metallurgical lime and one with metallurgical lime. The particle size in the compounds obtained was 5-40 mm.

### Portion A.

1 kg of the reduced slag was blended with 0,3 kg of roasted bauxite. 1,3 kg of material was obtained as a result, consisting:
32,34% CaO, 9,77% SiO₂, 5,37% MgO, 0,63% FeO, 0,31% Fe₂O₃, 1,20% MnO, 48,08% Al₂O₃, 1,49% TiO₂, 0,05% S.
100% of the slag mass is in the liquid state at a temperature exceeding 1583°C.

### Portion B.

1 kg of the reduced slag was blended with 0,3 kg of roasted bauxite and 0,3 kg of metallurgical lime. As a result of blending 1,6 kg of material was obtained, consisting:
43,90% CaO, 8,22% SiO₂, 4,42% MgO, 0,51% FeO, 0,25% Fe₂O₃, 0,97% MnO, 39,07% Al₂O₃, 1,20% TiO₂, 0,04% S.
At a temperature of 1600°C 99,48% of the slag mass is obtained in the liquid state, and 0,52% of the slag mass is in the form of solid precipitates of Ca₅Ti₄O₁₃.

### Portion C.

1 kg of the reduced slag was blended with 1 kg of roasted bauxite and 1 kg of metallurgical lime. As a result of blending 3 kg of material was obtained, consisting:
45,42% CaO, 6,13% SiO₂, 2,42% MgO, 0,27% FeO, 0,45% Fe₂O₃, 0,52% MnO, 41,37% Al₂O₃, 1,54%TiO₂, 0,02% S.
At a temperature of 1600°C 98,55% of the slag mass is obtained in the liquid state and 1,45% of the slag mass is in the form of solid precipitates of Ca₅TiO₄O₁₃.

### Example 2.

The chemical composition of the steelmaking calcium-aluminium ladle slag:
40,20% CaO, 10,01% SiO₂, 4,50% MgO, 3,14% FeO, 6,21% MnO, 33,98% Al₂O₃, 0,90% TiO₂, 0,06% S.

3 kg of the fragmented slag was blended with the ground carbon reducer, bringing in elemental carbon in the amount of 2% of the slag mass. The size of the fragmented slag particles did not exceed 50 mm and the size of the ground reducer particles did not exceed 5 mm. The resulting compound was melted in a single-electrode electric arc furnace. The process was carried out in a graphite crucible, taking 10 minutes at a temperature of 1650°C. After the process had been completed a liquid non-metallic phase without solid precipitates and a liquid metallic phase were obtained. The crucible content was poured onto a steel plate, quenched with compressed air while being poured out. After the reduced metal was separated, 2,7 kg of the non-metallic phase was obtained, its chemical constitution being:
43,44% CaO, 10,80% SiO₂, 4,82% MgO, 0,04% FeO, 2,95% MnO, 36,73% Al₂O₃, 0,88% TiO₂, 0,06% S.
To present the options for obtaining slag-forming materials of various chemical compositions the reduced slag was crushed, 2 kg of slag was taken and divided into 2 portions: A and B, both of 1 kg. One portion was blended with roasted bauxite, and the other with roasted bauxite and metallurgical lime. The particle size in the compounds obtained was 5-40 mm.

### Portion A.

1 kg of the reduced slag was blended with 0,3 kg of roasted bauxite. 1,3 kg of material was obtained as a result of blending, consisting:
33,42% CaO, 9,69% SiO₂, 3,71% MgO, 0,03% FeO, 0,31% Fe₂O₃, 2,26% MnO, 48,56% Al₂O₃, 1,56% TiO₂, 0,05% S.

At a temperature of 1600°C 99,82% of the slag mass is obtained in the liquid state and 0,18% of the slag mass is in the form of solid precipitates of CaTiO₃.

### Portion B.

1 kg of the reduced slag was blended with 0,3 kg of roasted bauxite and 0,3 kg of metallurgical lime. 1,6 kg of material was obtained as a result of blending, consisting:
44,83% CaO, 8,15% SiO₂, 3,07% MgO, 0,025% FeO, 0,25% Fe₂O₃, 1,84% MnO, 39,45% Al₂O₃, 1,27% TiO₂, 0,04% S.

At a temperature of 1600°C 99,10% of the slag mass is obtained in the liquid state and 0,90% of the slag mass is in the form of solid precipitates of Ca₅Ti₄O_{7.}

### Example 3.

The chemical composition of the steelmaking calcium-aluminium ladle slag:
35,49% CaO, 9,25 % SiO₂, 5,96% MgO, 8,14% FeO, 7,23% MnO, 30,39% Al₂O₃, 0,90% TiO₂, 0,04% S.

3 kg of the fragmented slag was blended with the ground carbon reducer, bringing in elemental carbon in the amount of 3% of the slag mass. The size of the fragmented slag particles did not exceed 50 mm and the size of the ground reducer particles did not exceed 5 mm. The resulting compound was remelted in a single-electrode electric arc furnace. The process was carried out in a graphite crucible, taking 13 minutes at a temperature of 1650°C. After the process had been completed a liquid non-metallic phase without solid precipitates and a liquid metallic phase were obtained. The crucible content was poured onto a steel plate and quenched with compressed air while being poured out. After the reduced metal was separated, 2,5 kg of the non-metallic phase was obtained, its chemical constitution being:
42,35% CaO, 10,95% SiO₂, 7,20% MgO, 0,1% FeO, 2,01% MnO, 36,40% Al₂O₃, 0,89% TiO₂, 0,04% S, 0,01% C.

In order to present the options for obtaining slag-forming materials of various chemical compositions the reduced slag was crushed, 2 kg of slag was taken and divided into 2 equal portions of 1 kg each: A and B, one being blended with metallurgical lime, and the other with roasted bauxite and metallurgical lime. The particle size in the compounds obtained was 5-40 mm.

### Portion A.

1 kg of the reduced slag was blended with 0,16 kg of metallurgical lime. 1,16 kg of material was obtained as a result of blending, consisting:
49,47% CaO, 9,64% SiO₂, 6,24% MgO, 0,07% FeO, 1,73% MnO, 31,38% Al₂O₃, 0,77% TiO₂, 0,003% S, 0,008% C.
100% of the slag mass is obtained in the liquid state at a temperature above 1522°C.

### Portion B.

1 kg of the reduced slag was blended with 0,15 kg of roasted bauxite and 0,3 kg of metallurgical lime. 1,45 kg of material was obtained as a result of blending, consisting:
48,68% CaO, 8,48% SiO₂, 5,02% MgO, 0,07% FeO, 0,14% Fe₂O₃, 1,38% MnO, 34,20% Al₂O₃, 1,01% TiO₂, 0,003% S, 0,007% C.
100% of the slag mass is obtained in the liquid state at a temperature exceeding 1584°C.

### Example 4.

The chemical constitution of the steelmaking converter slag:
45,40% CaO, 13,35% SiO₂, 3,61% MgO, 22,15% FeO, 9,5% Fe₂O₃, 3,13% MnO, 1,78% Al₂O₃, 0,61% P₂O₅, 0,08% S.

3 kg of fragmented slag was blended with 0,45 kg of roasted bauxite (15% of the slag mass) and with the ground carbon reducer bringing in elemental carbon in the amount of 8% of the slag mass. The size of the fragmented slag and bauxite particles did not exceed 50 mm and the size of the ground reducer particles did not exceed 5 mm. The resulting compound was remelted in a single-electrode electric arc furnace. The process was carried out in a graphite crucible, taking 18 minutes at a temperature of 1650°C. After the process had been completed a liquid non-metallic phase without solid precipitates and a liquid metallic phase were obtained. The crucible content was poured onto a steel plate and quenched with compressed air while being poured out. After the reduced metal was separated, 2,4 kg of the non-metallic phase was obtained, its chemical constitution being:
56,21% CaO, 17,40% SiO₂, 4,05% MgO, 0,78% FeO, 1,40% MnO, 18,57 Al₂O₃, 0,56% TiO₂, 0,19% P₂O₅, 0,08% S.

The reduced slag was crushed and blended with metallurgical lime and roasted bauxite. The mass of metallurgical lime in the compound was 0,3 kg/kg of the reduced slag and the mass of roasted bauxite was 1,35 kg/kg of the reduced slag. The particle size in the compound obtained was 5-40 mm. 6,36 kg of material was obtained as a result of blending, consisting:
32,00% CaO, 9,79% SiO₂, 1,56% MgO, 0.,9% FeO, 0,69% Fe₂O₃, 0,53% MnO, 51,84% Al₂O₃, 2,17% TiO₂, 0,07% P₂O₅, 0,03% S.

At a temperature of 1600°C, 99,63% of the slag mass is obtained in the liquid state, and 0,37% of the slag mass is in the form of solid precipitates of CaTiO₃.

### Example 5.

The chemical constitution of the steelmaking converter slag:
38,84% CaO, 8,71% SiO₂, 3,47% MgO, 29,86% FeO, 14,61% Fe₂O₃, 0,79% Al₂O₃, 0,49% P₂O₅, 0,06% S.

3 kg of the fragmented slag were blended with 0,6 kg of roasted bauxite (20% of the slag mass) and with the ground carbon reducer bringing in elemental carbon in the amount of 10% of the slag mass. The size of the fragmented slag and bauxite particles did not exceed 50 mm and the size of the ground reducer particles did not exceed 5 mm. The resulting compound was remelted in a single-electrode electric arc furnace. The process was carried out in a graphite crucible, taking 15 minutes at a temperature of 1650°C. After the process had been completed a liquid non-metallic phase without solid precipitates and a liquid metallic phase were obtained. The crucible content was poured onto a steel plate and quenched with compressed air while being poured out. After the reduced metal was separated, 2,1 kg of the reduced slag was obtained, its chemical constitution being:
53,15% CaO, 13,50% SiO₂, 4,56% MgO, 0,88% FeO, 1,51% MnO, 25,23% Al₂O₃, 0,75% TiO₂, 0,20% P₂O₅, 0,05% S.

The reduced slag was crushed and blended with roasted bauxite. The bauxite mass in the compound was 1,2 kg/kg of the reduced slag. The particle size in the obtained compound was 5-40 mm. 4,62 kg of the compound was obtained as a result of blending, consisting:
24,32% CaO, 9,40% SiO₂, 2,07% MgO, 0,4% FeO, 0,73% Fe₂O₃, 0,31% MnO, 59,47% Al₂O₃, 2,44% TiO₂, 0,09% P₂O₅, 0,02% S.

100% of the slag mass is obtained in the liquid state at a temperature exceeding 1598°C.

## Claims

1. The method of producing a slag-forming compound for secondary steel refining in a ladle or ladle furnace on the basis of the non-metallic phase from the reduction process of steelmaking calcium-aluminium ladle slag, **characterized in that** the fragmented reduced slag obtained in the reduction process of steelmaking converter slag with the participation of roasted bauxite or steelmaking calcium-aluminium ladle slag, is blended with fragmented roasted bauxite and/or metallurgical lime, and the obtained calcium-aluminium compound, of particle size 10-40 mm (consisting 20,0-55,0% CaO, 25,0-60,0% Al₂O₃, 6,0-11,0% SiO₂, 2,0-6,5% MgO, 0,5-3,0% FeO + %Fe₂O₃ + %MnO, 0,5-2,5% TiO₂, 0-0,1% P₂O₅ and 0,02-0,1% S), is then put into the molten steel, so that the mass of solid precipitates in the calcium-aluminium refining slag formed on the surface of the molten steel at 1600°C, determined by computer thermodynamic databases, does not exceed 2,0% of the total mass of the slag formed.

2. The method as claimed in claim 1, **characterized in that** the reduction process of steelmaking converter slag of particle size under 50 mm, with the participation of roasted bauxite of particle size under 50 mm (the amount of which constitutes 15-20% of the reduced slag mass) is carried out in the presence of a carbon reducer of particle size under 5 mm, bringing in elemental carbon in the amount of 5,0-10,0% of the mass of the slag reduced, and the total content of ferrous and manganese oxides in the reduced slag is under 3,0%.

3. The method as claimed in claim 1, **characterized in that** the reduction process of steelmaking calcium-aluminium ladle slag of particle size under 50 mm, is carried out in the presence of a carbon reducer of particle size under 5 mm, bringing in elemental carbon in the amount of 2,0-5,0% of the mass of the slag reduced, and the total content of ferrous and manganese oxides in the reduced slag is under 3,0%.

4. The method as claimed in claim 1 or 2 or 3, **characterized in that** the SiO₂ content in the slag reduced is 10,0-20,0% and the sulphur content is 0,01-0,15%.

5. The method as claimed in claim 1 or 2 or 3, **characterized in that** the roasted bauxite put into the reduced steelmaking converter slag or the reduced steelmaking calcium-aluminium ladle slag contains 86,0-92,0% Al₂O₃, 4,0-6,0% SiO₂, 0-0,5% MgO, 1,2-1,8% Fe₂O₃, 3,0-4,0% TiO₂ and 0-0,8% CaO.

6. The method as claimed in claim 1 or 2 or 3, **characterized in that** the lime put into the reduced steelmaking converter slag or the reduced steelmaking calcium-aluminium ladle slag contains 94,0-98,0% CaO, 1,0-2,0% SiO₂, 0-0,5% MgO and 0,5-5,0% volatile matter.
